# EUROPEAN PATENT APPLICATION

(11) **EP 1 509 047 A1**
(43) Date of publication of application: **23.02.2005**
(21) Application number: 04254908.9
(22) Date of filing: 16.08.2004
(51) Int. Cl.: H04N 17/00

(54) **Video signal monitoring**

(30) Priority: 19.08.2003 GB 0319476
(71) Applicant: SNELL & WILCOX LIMITED, Havant, Hampshire PO9 2PE (GB)
(72) Inventor: Schiller, Richard, Chester, Hampshire PO20 3UF (GB)
(74) Representative: Garratt, Peter Douglas

(57) **Abstract**

A format conversion device and method for monitoring an image signal in a first, preferably high definition spatial/temporal sampling format on a monitoring device operating on a second, preferably standard definition spatial/temporal sampling format. The signal is converted to colorimetric components from which an output is derived such that artefacts in the colour image signal are emphasised. Preferably the monitored output is derived from a primary colour component, preferably the blue component. Alternatively a colour difference component may be used to derive the monitored output.

## Description

This invention concerns monitoring of video signals, and more particularly monitoring the quality of compressed, high-definition television. Standard-definition television broadcasters who introduce new, high-definition services are faced with the possible problem of having to spend significant sums on new, high-definition monitoring equipment. Rather than do this, it may be more cost-effective to buy "monitoring down-converters", which convert high-definition signals to standard-definition, and use standard-definition picture monitors and other equipment.

High-definition signals are often transmitted in compressed form and an important aspect of monitoring such signals is the subjective assessment of coding artefacts. A known technique for rendering coding artefacts more visible is to view the Blue component of a decompressed colour signal on its own, without superimposing the corresponding Red and Green components. If, as is usually the case, the compression scheme divides the signal into luminance and colour-difference components, and then allocates more information to the luminance component than to the colour difference (chrominance) components, the Blue signal will have more artefacts than either the Red, or Green components, or the combined signal. This is because the luminance of blue is around 10% and therefore about 90% of the amplitude of the Blue component is carried in the blue colour-difference channel, and only 10% in the luminance channel.

Therefore, if the Blue colour signal is viewed in isolation, compression artefacts are magnified and they can be detected before they become apparent in the transmitted picture comprising the superposition of Red, Green and Blue components.

Professional, standard-definition picture monitors will usually have the facility to view any of the three colour components in isolation, and this feature has been used to aid the setting of saturation adjustments (typically in composite television systems). However, this feature is not usually provided on the cheapest television monitors, or on monitors sold for use with computers.

The inventor has appreciated that there is a novel method and apparatus for conveniently and economically assessing television artefacts, including for example compression artefacts, in a high-definition television signal. It is therefore an object of one aspect of the invention to provide a method and apparatus for prosessing an input image signal in a first format to produce an output which can then be input to a monitoring device having a second, different format. The signal processing can advantageously pruduce an output in which any artefacts present at the input are emphasisied, and can be displayed or analysed without requiring a specialist monitoring device.

The invention consists, in one aspect, of a format conversion device for use in monitoring a colour television signal or image data in a first spatial/temporal sampling format on a monitoring device operating on a second spatial/temporal sampling format, wherein the said signal or data are converted to one or more colorimetric components and one or more of the said colorimetric components are used to create one or more output colorimetric components for display on, or analysis in, the said monitoring device, characterised in that the said creation process emphasises artefacts in the colour television signal or image data.

Preferably, said creation process preferentially selects low luminance components of the signal, or looked at differently, preferably attenuates high luminance components of the signal. This is useful in providing a monitoring signal since, as explained above, if a signal has been divided into luminance and chrominance, less information is provided to represent chrominance.

Suitably one primary colour component or one colour difference component is used to create the monitored output. Preferably the blue component is used since blue usually contains the least luminance.

In a preferred embodiment, the colorimetric components used are luminance, red colour difference and blue colour difference. Preferably only one of the two colour difference components are used to create the output.

Advantageously the creation process produces an output signal in which compression artefacts are emphasised.

In a second aspect the invention consists in format conversion device for use in monitoring a colour television signal or image data in a first spatial/temporal sampling format on a monitoring device operating on a second spatial/temporal sampling format, wherein the said signal or data are converted to one or more colorimetric components and one or more of the said colorimetric components is used to create less than three differing output colorimetric components for display on, or analysis in, the said monitoring device.

Suitably, one primary colour component is used to create the monitored output. Alternatively, one colour-difference component is used to create the monitored output.

In a third aspect the invention provides a format conversion device for use in monitoring an image signal of a first spatial/temporal sampling format on a monitoring device operating at a second, different spatial/temporal sampling format, comprising a format converter for converting the format of the signal from said first to said second spatial/temporal sampling format; a processor for converting the signal to one or more colorimetric components; and an output stage for deriving, from said one or more colorimetric components, an output image signal in which artefacts are emphasised, and outputting said output signal for display on, or analysis in, the said monitoring device.

In a fourth aspect the invention provides a method for use in monitoring an image signal of a first spatial/temporal sampling format on a monitoring device operating at a second, different spatial/temporal sampling format, the method comprising converting the format of the signal from said first to said second spatial/temporal sampling format; converting the signal to one or more colorimetric components; deriving, from said one or more colorimetric components, an output image signal having emphasised artefacts; and outputting said output signal for display on, or analysis in, the said monitoring device

An example of the invention will now be described with reference to the drawings in which:
Figure 1 shows a system for monitoring a compressed HDTV signal
Figures 2a and 2b show different operating modes of a monitoring modification block, which forms part of the system of Figure 1.

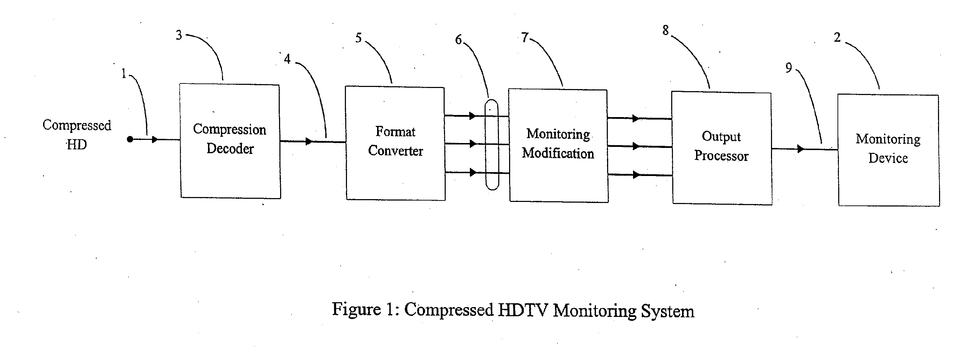

Referring to Figure 1, a compressed, high-definition signal (1) is to be monitored on a monitoring device (2), which may, for example be a picture monitor or waveform monitor. The signal (1) may be in any convenient form; it could be an MPEG transport stream or the output of a data storage device.

The signal (1) feeds a compression decoder (3) which converts it into an uncompressed signal or data-set (4). This could, for example, be a serial digital multiplex of luminance and colour-difference components, or an equivalent output of uncompressed data.

The output (4) feeds a format converter (5) which changes the format of the video so as to make it suitable for monitoring on the monitoring device (2). The conversion could be from progressively scanned high definition to interlaced standard definition; or, to a format suitable for display on a computer monitor. In any event the objective is to enable a cheaper, or more-readily available, monitoring device (2) to be used, rather a device appropriate to the format of the signal (1).

The output (6) of the converter (5) is a set of one luminance and two colour difference signals, for example the Y, C_{B}, C_{R} digital signals of the ITU/R digital interface. This set of signals passes through a monitoring modification block (7), which will be described below, to an output processor block (8). This output processor provides such functions as amplitude range limiting and blanking, and delivers an output (9) suitable for the monitoring device (2). The block (8) may provide composite coding, linear matrixing, multiplexing or other processes necessary to provide the appropriate input for the monitoring device (2).

The signal (9) may be an ITU/R Rec. 656 digital signal, parallel analogue components (RGB or YP_{B}P_{R}), a composite (NTSC or PAL) signal or any other appropriate signal format for the device (2).

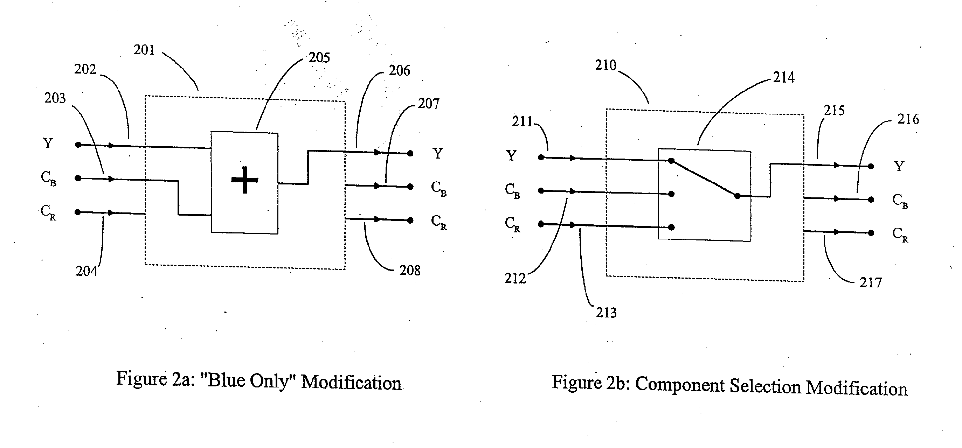

Referring now to Figures 2a and 2b, two operating modes of the block (7) of Figure 1 will now be described. In these figures the inputs and outputs of the modification block are shown as a set of Y C_{B} C_{R} components, however other colourimetric components, such as alternative arrangements of luminance and colour difference signals are not ruled out.

In Figure 2a a "blue-only" function (201) is shown. The luminance input (202) is combined with the blue colour-difference input (203) in a weighted summing device (205) to create the Blue component of the colour picture. This Blue component is connected to the luminance output (206). No signals are output to the C_{B} and C_{R} outputs (207) and (208). The C_{R} input (204) is not used. It will be appreciated that if the monitoring device (2) of Figure 1 is a picture monitor then the blue component of the picture will be displayed as a full-amplitude monochrome image, which, of course, will not have the correct tonal rendition of the scene, but the compression artefacts of the chrominance channel will be magnified.

Figure 2b shows another mode of operation (210) of block (7) of Figure 1. In this case the three input components (211), (212) and (213) are fed to different poles of a selector switch (214). This switch routes the luminance output (215) to one of the three input components. No signal is fed to the colour difference outputs (216) and (217). In this mode an operator can select one of the component for examination on a picture monitor or waveform monitor. The output processing block (8) of Figure 1 ensures that the colour difference signals are correctly blanked for display. In another mode the switch (214) can be incremented automatically at fixed points within the picture so as to enable more than one component to be displayed simultaneously.

Other operating modes of block (7) of Figure 1 will be apparent to the skilled person. For example, the colour difference signal could be amplified to give an over-saturated version of the picture at the monitoring device (2) of Figure 1.

## Claims

1. A format conversion device for use in monitoring a colour television signal or image data in a first spatial/temporal sampling format on a monitoring device operating on a second spatial/temporal sampling format, wherein the said signal or data are converted to one or more colorimetric components and one or more of the said colorimetric components are used to create one or more output colorimetric components for display on, or analysis in, the said monitoring device, such that the said creation process emphasises artefacts in the colour television signal or image data.

2. A device according to Claim 1, wherein said creation process preferentially selects low luminance components of the signal.

3. A device according to Claim 1 or Claim 2, wherein said colorimetric components are luminance, red colour difference and blue colour difference.

4. A device according to Claim 3, wherein a single colour difference component is used to create said monitored output.

5. A device according to any preceding claim, wherein one primary colour component is used to create the monitored output.

6. A device according to any preceding claim, wherein one colour-difference component is used to create the monitored output.

7. A device according to any preceding claim, wherein the blue component is used to create the monitored output.

8. A device according to any preceding claim, wherein said first spatial/temporal sampling format is a high definition television format, and wherein said second spatial/temporal sampling format is a standard definition television format.

9. A device according to any preceding claim, wherein compression artefacts are emphasised.

10. A format conversion device for use in monitoring a colour television signal or image data in a first spatial/temporal sampling format on a monitoring device operating on a second spatial/temporal sampling format, wherein the said signal or data are converted to one or more colorimetric components and one or more of the said colorimetric components is used to derive less than three differing output colorimetric components for display on, or analysis in, the said monitoring device.

11. A format conversion device for use in monitoring an image signal of a first spatial/temporal sampling format on a monitoring device operating at a second, different spatial/temporal sampling format, comprising:
a format converter for converting the format of the signal from said first to said second spatial/temporal sampling format;
a processor for converting the signal to one or more colorimetric components; and
an output stage for deriving, from said one or more colorimetric components, an output image signal in which artefacts are emphasised, and outputting said output signal for display on, or analysis in, the said monitoring device.

12. A format conversion device according to Claim 10 or Claim 11, wherein said deriving preferentially selects low luminance components of the signal.

13. A format conversion device according to any one of Claims 10 to 12, wherein a single primary colour component is used to derive the monitored output.

14. A format conversion device according to any one of Claims 10 to 12, wherein a single colour-difference component is used to derive the monitored output.

15. A method for use in monitoring an image signal of a first spatial/temporal sampling format on a monitoring device operating at a second, different spatial/temporal sampling format, the method comprising:
converting the format of the signal from said first to said second spatial/temporal sampling format;
converting the signal to one or more colorimetric components;
deriving, from said one or more colorimetric components, an output image signal having emphasised artefacts; and
outputting said output signal for display on, or analysis in, the said monitoring device.

16. A method according to Claim 15, wherein said deriving preferentially selects low luminance components of the signal.

17. A method according to Claim 15, wherein a single primary colour component is used to derive the monitored output.

18. A method according to Claim 15, wherein a single colour-difference component is used to derive the monitored output.
